# EUROPEAN PATENT APPLICATION

(11) **EP 2 352 294 A1**
(43) Date of publication of application: **03.08.2011**
(21) Application number: 09829234.5
(22) Date of filing: 11.09.2009
(51) Int. Cl.: H04N 7/26

(54) **APPARATUS AND METHOD FOR MOTION ESTIMATION-BASED IMAGE ENCODING/DECODING**

(30) Priority: 25.11.2008 KR 20080117290
(71) Applicant: Sk Telecom Co., LTD, Seoul 100-999 (KR)
(72) Inventor: BAE, Tae Meon, Daegu 702-260 (KR)
(74) Representative: Neobard, William John
(86) International application number: PCT/KR2009/005166
(87) International publication number: WO 2010/062027

(57) **Abstract**

The present invention relates to an apparatus and to a method for motion estimation-based encoding/decoding, which estimate a motion and perform an encoding operation based on a photo core transform and a photo overlap transform in a motion picture encoding process, and perform a motion compensation and a decoding operation in a motion picture decoding process, thereby removing the temporal and spatial redundancy of the motion picture. The video processing system according to the present invention comprises: a video encoding apparatus which transforms the received video based on a motion estimation through a photo core transform and a photo overlap transform, encodes the video by a variable length coding technique, and outputs a bit stream; and a video decoding apparatus which performs a motion compensation and a decoding operation on the bit stream received from the video encoding apparatus. The present invention enables a video reproduction or compression through a video codec of a low complexity even in a low performance mobile device, and prolongs the useful life of a battery.

## Description

### [Technical Field]

The present invention relates to an apparatus and method for encoding and decoding a video based on motion estimation and, more particularly, to an apparatus and method for encoding and decoding a video based on motion estimation, wherein intra-coding is performed and, after motion estimation, motion-based inter-video coding in which the remaining videos are not encoded, through a hierarchical two-stage Lapped Biorthogonal (LB) transform based on a photo core transform and a photo overlap transform when a moving image is encoded for high-performance and low computational encoding, thereby removing temporal and spatial redundancy of a moving image.

### [Background Art]

In general, a digital video signal is compressed and encoded according to a specific method because it has a very high capacity of data and then transmitted or is recorded on a recording medium. A Moving Picture Experts Group (MPEG) method has recently been known as the standard method of a compression and encoding system. In the MPEG method, a digital video signal is compressed and encoded using a Discrete Cosine Transform (DCT) and motion compensation or the compression ratio of data is increased by using Variable Length Coding (VLC).

A data structure in the MPEG method consists of a block layer, a macro block layer, a slice layer, a picture layer, a GOP layer, and a sequence layer in the sequence from a lower layer to an upper layer. The block layer is composed of a DCT block that is a unit for performing DCT processing. The macro block layer consists of a plurality of DCT blocks. The slice layer consists of a header part and one or more macro blocks. The picture layer consists of a header part and one or more slices. One picture corresponds to one screen.

The GOP layer consists of an Intra-coded (I) picture based on a header part and intra-frame encoding, Predictive-coded (P) pictures based on predictive encoding, and Bidirectionally predictive coded (B) pictures. The I picture can be decoded by only its own information. The P and B pictures are a reference picture. The P and B pictures require previous or subsequent pictures, and they are not solely decoded. For example, the P picture may be decoded using the I picture or the P picture, temporally earlier than itself, as a reference picture. Furthermore, the B picture is decoded by using two sheets of I pictures or P pictures before and after the B picture as a reference picture. A group, configured to include a sheet of the I picture and completed in itself, is called a Group Of Picture (GOP). The GOP becomes a minimum unit that is accessible in the streams of MPEG.

However, when the compressed video is streamed from a server to a mobile device and played in the mobile device, the mobile device experiences great limits to the computational performance, memory, and the battery, unlike a common Personal Computer (PC).

In the case where the play or compression function of a moving image is performed in the mobile device, the play time of the battery becomes longer with a reduction in the computational complexity of a video codec responsible for the play and compression, and driving is possible in a limited computational ability situation.

In general, the most widely used video codecs include MPEG-4, H.264, and H.263 video codecs. The above MPEG-based video codecs exhibit a high compression ratio, but have high computational complexity. Accordingly, in mobile devices adopting the video codecs, such as mobile phones, the battery is discharged if play is performed for 1 to 2 hours or more. In particular, there is a problem in that when video compression functions, such as video communication, personal broadcasting, and video recording, are performed, the lifespan of the battery is further reduced because much greater computational complexity is required for the play of video.

### [Disclosure]

### [Technical Problem]

The present invention has been made in view of the above problems occurring in the prior art, and an object of the present invention is to provide a video processing system and method and an apparatus and method for encoding and decoding a video based on motion estimation, wherein intra-coding is performed and, after motion estimation, motion-based inter-video coding in which the remaining videos are not encoded, through a hierarchical two-stage LB transform based on a photo core transform and a photo overlap transform when a moving image is encoded for high-performance and low computational encoding, thereby removing temporal and spatial redundancy of a moving image.

### [Technical Solution]

To achieve the above object, a video processing system according to the present invention includes a video encoding apparatus for removing intra-video redundancy of a received moving image through a hierarchical two-stage Lapped Biorthogonal (LB) transform based on a photo core transform and a photo overlap transform, performing motion estimation on the motion video, performing motion-based inter-coding of the motion video in which remaining videos are encoded, encoding the encoded video into Variable Length Codes (VLC), and outputting the video in the form of bit streams; and a video decoding apparatus for compensating for motion of the bit streams received from the video encoding apparatus and decoding the video.

In this case, the video encoding apparatus encodes the received video per block and outputs the encoded video in the form of bit streams.

Meanwhile, to achieve the above object, a video processing method of a system, including a video encoding apparatus and a video decoding apparatus, according to the present invention includes the steps of (a) the video encoding apparatus transforming a received video through a hierarchical two-stage LB transform based on a photo core transform and a photo overlap transform on the basis of motion estimation and encoding the transformed video; (b) the video encoding apparatus transmitting the encoded video to the video decoding apparatus in a bit stream form; (c) the video encoding apparatus compensating for motion of the bit streams and decoding the motion-compensated video; and (d) the video decoding apparatus playing the decoded video.

In the step (a), the video, transformed through the photo core transform and the photo overlap transform, are encoded into VLCs.

Meanwhile, to achieve the above object, a video encoding apparatus according to the present invention includes a video input unit for receiving a video; a photo core transform unit for transforming the received video based on a photo; a quantization unit for quantizing the video transformed based on the photo; a VLC unit for performing VLC processing on the quantized video; an inverse quantization unit for performing inverse quantization processing on the quantized video; a video storage unit for storing a previous video to be used as a reference frame in the inverse quantized video; a motion estimation unit for estimating motion of the stored previous video and transferring the motion-estimated video to the photo transform unit; and a control unit for controlling operations of the video input unit, the photo transform unit, the quantization unit, the inverse quantization unit, the video storage unit, and the motion estimation unit.

Furthermore, the video input unit transfers the received video to the photo transform unit and the motion estimation unit simultaneously.

Furthermore, the video encoding apparatus further includes a multiplexing unit for multiplexing the video of the VLC unit and the video of the motion estimation unit and for outputting the multiplexed video in a bit stream form.

Meanwhile, to achieve the above object, a video decoding apparatus according to the present invention includes a variable length decoder unit for decoding a video, received from a video encoding apparatus, in a variable length way; an inverse quantization unit for performing inverse quantization process on the decoded video; a photo inverse transform unit for performing inverse transform processing on the inverse quantized video based on a photo; a video storage unit for storing the video inverse-transformed based on the photo; a motion compensation unit for compensating for motion of the video inverse-transformed based on the photo; a video play unit for playing the motion-compensated video; and a control unit for controlling operations of the variable length decoder unit, the inverse quantization unit, the photo inverse transform unit, the video storage unit, the motion compensation unit, and the video play unit.

Furthermore, the video decoding apparatus further includes a demultiplexing unit for demultiplexing the video of bit streams received from the video encoding apparatus and simultaneously transmitting the demultiplexed video to the variable length decoder unit and the motion compensation unit.

Meanwhile, to achieve the above object, a video encoding method according to the present invention includes the steps of (a) transforming a received video based on a hierarchical two-stage Lapped Biorthogonal (LB) transform and motion estimation in which the remaining videos are not encoded; (b) quantizing the video transformed based on the photo; and (c) encoding the quantized video in a variable length way.

Furthermore, the video encoding method further includes the steps of (d) performing inverse quantization processing on the quantized video; (e) storing a previous video to be used as a reference frame in the inverse quantized video; (f) estimation motion of the previous video; and (g) applying the motion-estimated video to the encoding of the step (c).

Furthermore, in the step (c), if a difference between a block encoded right before and a current block is equal to or smaller than a specific critical value, a video of the block right before is encoded in a skip mode in which the video of the block right before is used without change.

Furthermore, in the step (c), if the video of the block right before is unable to be encoded in the skip mode and a difference between the motion-estimated video and an original video is equal to or smaller than the specific critical value, the video is encoded in a zero motion mode.

Furthermore, if the difference between the block of the motion-estimated video and the block of an original video is equal to or smaller than the specific critical value, the video is encoded using only in an operation estimation mode in which only motion information is transmitted. If the difference between the motion-estimated video and the original video is greater than the specific critical value, the quantized video is encoded per block in a JPEG XR method.

Meanwhile, to achieve the above object, a video decoding method according to the present invention includes the steps of (a) decoding a video, received from a video encoding apparatus, in a variable length way; (b) performing inverse quantization processing on the decoded video; (c) performing inverse transform processing on the inverse quantized video based on a photo; and (d) compensating for motion of the video inverse-transformed based on the photo.

The video decoding method further includes the step (e) of playing the motion-compensated video.

Meanwhile, the video encoding method according to the present invention may be recorded on a computer-readable medium in the form of a program. Furthermore, the video decoding method according to the present invention may be recorded on a computer-readable medium in the form of a program.

### [Advantageous Effects]

According to the present invention, even in mobile devices having low performance, a video play operation or a compression operation can be executed through a video codec with a low computational complexity and the lifespan of the battery can be increased.

### [Description of Drawings]

FIG. 1 is a configuration schematically showing the configuration of a video processing system according to an embodiment of the present invention;
FIG. 2 is a configuration schematically showing the internal configuration of a video encoding apparatus according to an embodiment of the present invention;
FIG. 3 is a configuration schematically showing the internal configuration of a video decoding apparatus according to an embodiment of the present invention;
FIG. 4 is a flowchart illustrating a video processing method according to an embodiment of the present invention;
FIG. 5 is an operation flowchart illustrating a method of the video encoding apparatus encoding a video based on motion estimation according to an embodiment of the present invention; and
FIG. 6 is an operation flowchart illustrating a method of the video decoding apparatus decoding a video according to an embodiment of the present invention.

### [Best Mode]

Hereinafter, detailed contents about the objects, technical configurations, and operational effects thereof according to the present invention will be more clearly understood from the following detailed description of the present invention, which will be described with reference to the attached drawings.

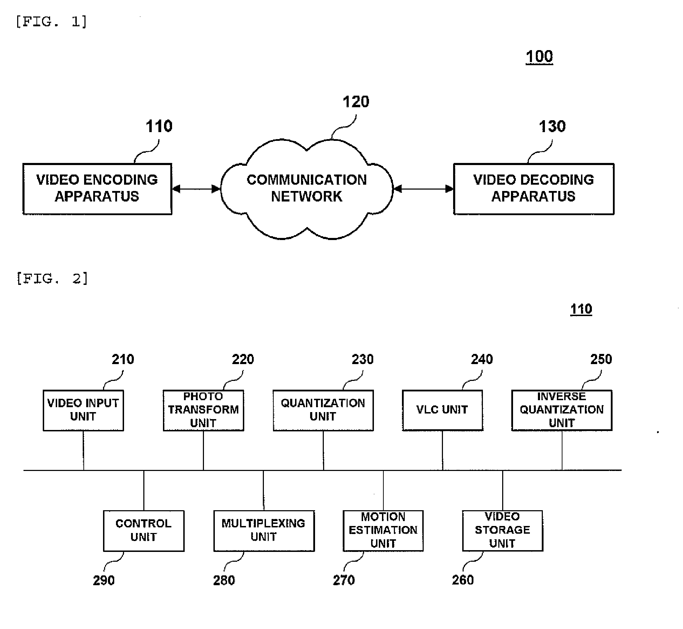

FIG. 1 is a configuration schematically showing the configuration of a video processing system according to an embodiment of the present invention.

Referring to FIG. 1, the video processing system 100 according to the present invention includes a video encoding apparatus 110, a communication network 120, and a video decoding apparatus 130.

The video encoding apparatus 110 may become a server for providing a moving video in a streaming form or may become a mobile terminal for providing a moving video to a counterpart terminal.

Accordingly, the video encoding apparatus 110 transforms a received video through a hierarchical two-stage LB transform based on a photo core transform and a photo overlap transform on the basis of motion estimation, encodes the video into Variable Length Codes (VLCs), and outputs the video in the form of bit streams.

In this case, the video encoding apparatus 110 encodes the received video per block and outputs the encoded video in the form of bit streams.

The communication network 120 may be a wireless communication network including mobile communication networks, such as a CDMA scheme, an HSDPA scheme, a WCDMA scheme, and a TD-SCDMA scheme, or may be a wired communication network, such as the Internet network.

The video decoding apparatus 130 compensates for the motion of the video of bit streams received from the video encoding apparatus 110 and decodes the video. Here, the video decoding apparatus 130 may be a mobile terminal for receiving media content, such as a moving image, and playing the received media content, or may be a video play device, such as a DVD.

### [Mode for Invention]

FIG. 2 is a configuration schematically showing the internal configuration of the video encoding apparatus according to an embodiment of the present invention.

Referring to FIG. 2, the video encoding apparatus 110 according to the present invention includes a video input unit 210, a photo transform unit 220, a quantization unit 230, a Variable Length Coder (VLC) unit 240, an inverse quantization unit 250, a video storage unit 260, a motion estimation unit 270, a multiplexing unit 280, and a control unit 290.

The video input unit 210 receives a video, such as a moving image.

The photo transform unit 220 transforms the video, received through the video input unit 210, through a hierarchical two-stage LB transform based on a photo core transform and a photo overlap transform.

The quantization unit 230 quantizes the video transformed by the photo transform unit 220 on the basis of the hierarchical two-stage LB transform.

The VLC unit 240 encodes the video, quantized by the quantization unit 230, into variable length codes.

The inverse quantization unit 250 performs inverse quantization processing on the video quantized by the quantization unit 230.

The video storage unit 260 stores a previous video to be used as a reference frame in the video subjected to the inverse quantization processing by the inverse quantization unit 250.

The motion estimation unit 270 estimates motion in the previous video stored in the video storage unit 260 and transfers the motion-estimated video to the photo transform unit 220.

The multiplexing unit 280 multiplexes the video outputted from the VLC unit 240 and the video outputted from the motion estimation unit 270 and outputs the video in the form of bit streams.

The control unit 290 controls the operations of the video input unit 210, the photo transform unit 220, the quantization unit 230, the VLC unit 240, the inverse quantization unit 250, the video storage unit 260, and the motion estimation unit 270.

Furthermore, the video input unit 210 transfers the received video to the photo transform unit 220 and to the motion estimation unit 270 at the same time.

Furthermore, the photo transform unit 220, the quantization unit 230, and the VLC unit 240 are operated on the basis of JPEG XR (extended Range).

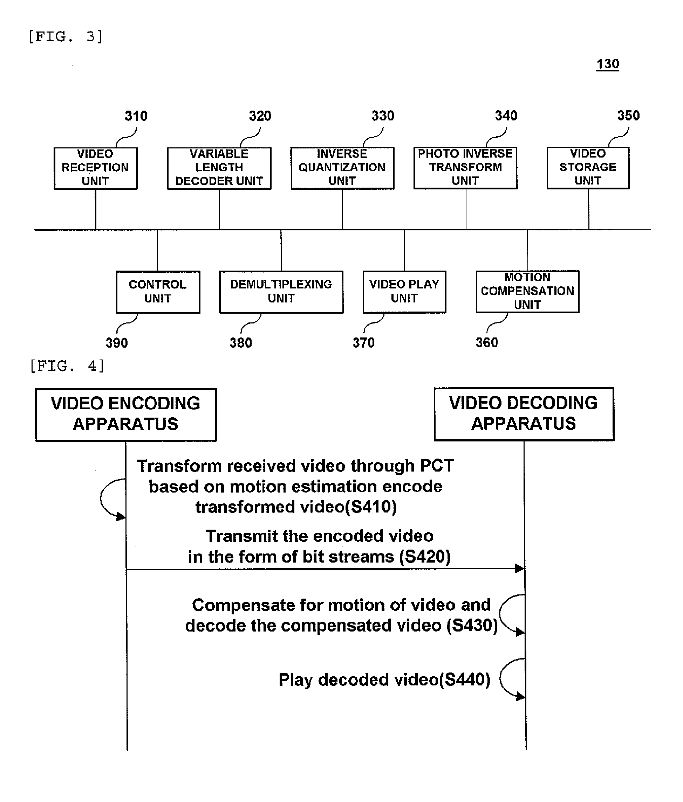

FIG. 3 is a configuration schematically showing the internal configuration of the video decoding apparatus according to an embodiment of the present invention.

Referring to FIG. 3, the video decoding apparatus 130 according to the present invention includes a video reception unit 310, a variable length decoder unit 320, an inverse quantization unit 330, a photo inverse transform unit 340, a video storage unit 350, a motion compensation unit 360, a video play unit 370, a demultiplexing unit 380, and a control unit 390.

The video reception unit 310 receives video data, such as a moving video which is transmitted in a streaming form by the video encoding apparatus 110.

The variable length decoder unit 320 decodes the video, received from the video encoding apparatus 110, in a variable length way.

The inverse quantization unit 330 performs inverse quantization processing on the video decoded by the variable length decoder unit 320.

The photo inverse transform unit 340 performs inverse transform processing on the video subjected to inverse quantization processing by the inverse quantization unit 330, on the basis of a hierarchical two-stage inverse LB transform.

The video storage unit 350 stores the video subjected to the inverse transform processing on the basis of the hierarchical two-stage inverse LB transform by the photo inverse transform unit 340.

The motion compensation unit 360 compensates for the motion of the video subjected to the inverse transform processing on the basis of the hierarchical two-stage inverse LB transform.

The video play unit 370 plays the motion-compensated video of the motion compensation unit 360.

The demultiplexing unit 380 demultiplexes the video of bit streams received from the video encoding apparatus 110 and transfers the video to the variable length decoder unit 320 and the motion compensation unit 360 at the same time.

The control unit 390 controls the operations of the video reception unit 310, the variable length decoder unit 320, the inverse quantization unit 330, the photo inverse transform unit 340, the video storage unit 350, the motion compensation unit 360, and the video play unit 370.

FIG. 4 is a flowchart illustrating a video processing method according to an embodiment of the present invention.

Referring to FIG. 4, the video encoding apparatus 110 transforms a received video through hierarchical two-stage LB transform based on a photo core transform (PCT) and a photo overlap transform on the basis of motion estimation and encodes the video at step S410.

That is, the video encoding apparatus 110 encodes the video, transformed through the hierarchical two-stage LB transform based on a photo core transform and a photo overlap transform, into Variable Length Codes (VLCs).

Next, the video encoding apparatus 110 transmits the encoded video to the video decoding apparatus 130 in the form of bit streams over the communication network 120 at step S420.

In response thereto, the video decoding apparatus 130 compensates for the motion of the bit streams received from the video encoding apparatus 110 and decodes the video at step S430.

Accordingly, the video decoding apparatus 130 plays the decoded video at step S440.

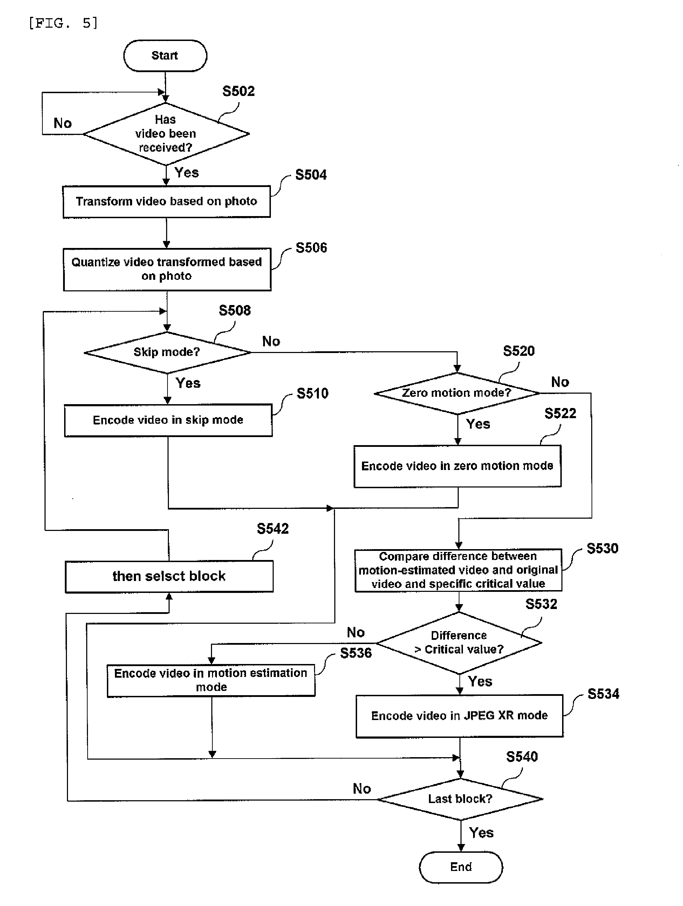

FIG. 5 is an operation flowchart illustrating a method of the video encoding apparatus encoding a video based on motion estimation according to an embodiment of the present invention.

Referring to FIG. 5, when a video is received through the video input unit 210 at step S502, the video encoding apparatus 110 according to the present invention first determines whether the video can be encoded in a skip mode at step S508. If, as a result of the determination, the video are determined to be encoded in the skip mode (Yes, at step S508), the video encoding apparatus 110 encodes the video in the skip mode at step S510.

In this case, the skip mode is a mode in which a video block encoded right before is copied and used, if the difference between the video block right before and a current video block is smaller than a specific critical value.

However, if, as a result of the determination, the video is determined not to be encoded in the skip mode (No, at step S508), the video encoding apparatus 110 determines whether the video can be encoded in a zero motion mode at step S520. If, as a result of the determination, the video is determined that it can be encoded in the zero motion mode (Yes, at step S520), the video encoding apparatus 110 encodes the video in the zero motion mode at step S522.

Meanwhile, If, as a result of the determination, the video is determined that it can be encoded in the zero motion mode (No, at step S520), the video encoding apparatus 110 compares the difference between a motion estimation video and an original video and a specific critical value at step S530. If, as a result of the comparison, the difference is greater than the specific critical value (Yes, at step S532), the video encoding apparatus 110 encodes the video using a JPEG XR method at step S534.

In this case, the encoding using the JPEG XR method refers to the transform of a received video block through the photo transform unit 220. The video encoding apparatus 110 quantizes the result of the photo transform unit 220 through the quantization unit 230. Next, the video encoding apparatus 110 encodes the video quantized by the quantization unit 230, a motion estimation mode, and motion information in a VLC way and outputs the video in the form of bit streams.

However, if, as a result of the comparison, the difference is equal to or smaller than the specific critical value (No, at step S532), the video encoding apparatus 110 encodes the video in a motion estimation mode at step S536.

The video encoding apparatus 110 performs encoding in the skip mode at step S510, encoding in the zero motion mode at step S522, or encoding in the JPEG XR method at step S534. Next, the video encoding apparatus 110 determines whether a video block on which the encoding has been performed is the last block at step S540. If, as a result of the determination, the video block on which the encoding has been performed is determined to be the last block, the video encoding apparatus 110 terminates the encoding operation. If, as a result of the determination, the video block on which the encoding has been performed is determined not to be the last block (No, at step S540), the video encoding apparatus 110 selects a next video block at step S542, returns to the step S508 of determining whether the video of the next block can be encoded in the skip mode, and encodes the video of the next block.

Meanwhile, in the case where a video is encoded in a motion estimation mode, the video encoding apparatus 110 quantizes a video, transformed on the basis of a hierarchical two-stage LB transform, through the quantization unit 230, performs inverse quantization processing on some of the quantized video through the inverse quantization unit 250, decodes the inverse quantized video through a hierarchical two-stage inverse LB transform, and stores the decoded video in the video storage unit 260 as a previous video which will be used as a reference frame.

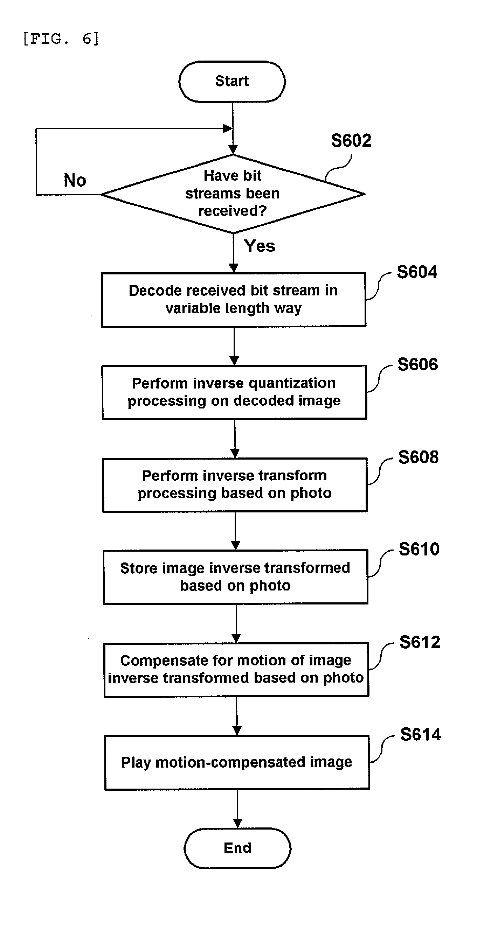

FIG. 6 is an operation flowchart illustrating a method of the video decoding apparatus decoding a video according to an embodiment of the present invention.

Referring to FIG. 6, when bit streams are received from the video encoding apparatus 110 through the video reception unit 310 at step S602, the video decoding apparatus 130 decodes the received bit streams per block in a variable length way through the variable length decoder unit 320 at step S604.

Next, the video decoding apparatus 130 checks the encoding mode of the video block through the variable length decoder unit 320 at step S606. If, as a result of the check, the video block is a video block encoded according to a hierarchical two-stage LB transform (Yes, at step S608), the video decoding apparatus 130 performs inverse quantization processing on the bit streams per block through the inverse quantization unit 330 at step S610 and performs inverse transform processing on the inverse quantized video using a hierarchical two-stage inverse LB transform through the photo inverse transform unit 340 at step S612.

However, if the encoding mode of the video block is the skip mode, the zero motion mode, or the motion estimation mode (No, at step S608), the video decoding apparatus 130 generates a video block having motion compensated for through the motion compensation unit 360 at step S614.

Next, if the video block, subjected to inverse transform processing through the hierarchical two-stage inverse LB transform or generated through motion compensation, is the last block (Yes, at step S616), the video decoding apparatus 130 terminates the process. If the video block is not the last block (No, at step S616), the video decoding apparatus 130 returns to step S604 in which bit streams are decoded using a variable length way.

Meanwhile, the video encoding method according to the present invention may be recorded on a computer-readable medium in the form of a program. Furthermore, the video decoding method according to the present invention may be recorded on a computer-readable medium in the form of a program.

As described above, the present invention can achieve the video processing system and method and the apparatus and method for encoding and decoding a video based on motion estimation, wherein intra-coding is performed and, after motion estimation, motion-based inter-video coding in which the remaining videos are not encoded, through a hierarchical two-stage LB transform based on a photo core transform and a photo overlap transform when a moving image is encoded for high-performance and low computational encoding, thereby removing temporal and spatial redundancy of a moving image.

A person having ordinary skill in the art to which the present invention pertains will understand that the present invention may be implemented in various detailed forms without changing the technical spirit or indispensable characteristics of the present invention. It will be understood that the above-described embodiments are illustrative and not limitative from all aspects. The scope of the present invention is defined by the appended claims rather than the detailed description, and the present invention should be construed to cover all modifications or variations induced from the meaning and scope of the appended claims and their equivalents.

### [Industrial Applicability]

The present invention may be applied to mobile devices with a low computational complexity and low performance, capable of playing video. Furthermore, the present invention may be applied to video processing apparatuses which can perform a compression operation and requires an extended battery lifespan.

Furthermore, the present invention may be applied to video encoding apparatuses, requiring intra-coding through a hierarchical two-stage LB transform based on a photo core transform and a photo overlap transform and requiring motion-based inter-coding in which the remaining videos are not encoded after motion estimation.

## Claims

1. A video processing system, comprising:
a video encoding apparatus for removing temporal and spatial redundancy of a received moving image by performing intra-coding on the motion video through a hierarchical two-stage Lapped Biorthogonal (LB) transform based on a photo core transform and a photo overlap transform, and performing motion estimation on the motion video, performing motion-based inter-coding of the motion video in which remaining videos are not encoded, encoding the encoded video into Variable Length Codes (VLC), and outputting the video in a bit stream form; and
a video decoding apparatus for compensating for motion of the bit streams received from the video encoding apparatus and decoding the video.

2. A video processing method of a system comprising a video encoding apparatus and a video decoding apparatus, comprising the steps of:
(a) the video encoding apparatus transforming a received video through a hierarchical two-stage LB transform based on a photo core transform and a photo overlap transform on the basis of motion estimation and encoding the transformed video;
(b) the video encoding apparatus transmitting the encoded video to the video decoding apparatus in a bit stream form;
(c) the video decoding apparatus compensating for motion of the bit streams and decoding the motion-compensated video; and
(d) the video decoding apparatus playing the decoded video.

3. The video processing method according to claim 2, wherein in the step (a), the video, transformed through the photo core transform and the photo overlap transform, is encoded into VLCs.

4. A video encoding apparatus, comprising:
a video input unit for receiving a video;
a photo core transform unit for transforming the received video based on a photo;
a quantization unit for quantizing the video transformed based on the photo;
a VLC unit for performing VLC encoding on the quantized video;
an inverse quantization unit for performing inverse quantization processing on the quantized video;
a video storage unit for storing a previous video to be used as a reference frame in the inverse quantized video;
a motion estimation unit for estimating motion of the stored previous video and transferring the motion-estimated video to the photo core transform unit; and
a control unit for controlling operations of the video input unit, the photo core transform unit, the quantization unit, the inverse quantization unit, the video storage unit, and the motion estimation unit.

5. The video encoding apparatus according to claim 4, wherein the video input unit transfers the received video to the photo core transform unit and the motion estimation unit simultaneously.

6. The video encoding apparatus according to claim 4, further comprising a multiplexing unit for multiplexing the video of the VLC unit and the video of the motion estimation unit and for outputting the multiplexed video in a bit stream form.

7. A video decoding apparatus, comprising:
a variable length decoder unit for decoding a video, received from a video encoding apparatus, in a variable length way;
an inverse quantization unit for performing inverse quantization process on the decoded video;
a photo inverse transform unit for performing inverse transform processing on the inverse quantized video based on a photo;
a video storage unit for storing the video inverse-transformed based on the photo;
a motion compensation unit for compensating for motion of the video inverse-transformed based on the photo;
a video play unit for playing the motion-compensated video; and
a control unit for controlling operations of the variable length decoder unit, the inverse quantization unit, the photo inverse transform unit, the video storage unit, the motion compensation unit, and the video play unit.

8. The video decoding apparatus according to claim 7, further comprising a demultiplexing unit for demultiplexing the video of bit streams received from the video encoding apparatus and simultaneously transmitting the demultiplexed video to the variable length decoder unit and the motion compensation unit.

9. A video encoding method, comprising the steps of:
(a) transforming a received video based on a photo;
(b) quantizing the video transformed based on the photo; and
(c) encoding the quantized video in a variable length way.

10. The video encoding method according to claim 9, further comprising the steps of:
(d) performing inverse quantization processing on the quantized video;
(e) storing a previous video to be used as a reference frame in the inverse quantized video;
(f) estimation motion of the previous video; and
(g) applying the motion-estimated video to the encoding of the step (c).

11. The video encoding method according to claim 9, wherein in the step (c), if a difference between a block encoded right before and a current block is equal to or smaller than a specific critical value, a video of the block right before is encoded in a skip mode in which the video of the block right before is used without change.

12. The video encoding method according to claim 11, wherein in the step (c), if the video of the block right before is unable to be encoded in the skip mode and a difference between the motion-estimated video and an original video is equal to or smaller than a specific critical value, the video is encoded in a zero motion mode.

13. The video encoding method according to claim 9, wherein in the step (c), if a difference between the motion-estimated video and an original video is greater than a specific critical value, the quantized video is encoded per block in a JPEG XR method.

14. A video decoding method, comprising the steps of:
(a) decoding a video, received from a video encoding apparatus, in a variable length way;
(b) performing inverse quantization processing on the decoded video;
(c) performing inverse transform processing on the inverse quantized video based on a photo; and
(d) compensating for motion of the video inverse-transformed based on the photo.

15. The video decoding method according to claim 14, further comprising the step (e) of playing the motion-compensated video.

16. A computer-readable medium on which a video encoding method according to any one of claims 9 to 13 is recorded in a program form.

17. A computer-readable medium on which a video decoding method according to any one of claims 14 to 15 is recorded in a program form.
